# EUROPÄISCHE PATENTANMELDUNG

(11) **EP 2 130 639 A1**
(43) Veröffentlichungstag der Anmeldung: **09.12.2009**
(21) Anmeldenummer: 08405149.9
(22) Anmeldetag: 04.06.2008
(51) Int. Cl.: B23K 26/42, B23K 26/38, B23K 37/04, B23K 37/00, F16P 1/02, B23Q 11/08

(54) **Laserschneidanlage mit Schutzplatten**

(71) Anmelder: Bystronic Laser AG, 3362 Niederönz (CH)
(72) Erfinder: Lanz, Ueli, 3375 Inkwil (CH); Hess, Anton, 3362 Niederönz (CH); Plüss, Christoph, 3007 Bern (CH)
(74) Vertreter: EGLI-EUROPEAN PATENT ATTORNEYS

(57) **Zusammenfassung**

Die Laserschneidanlage (1) zum Schneiden von Werkstücken (21)mittels eines Laserstrahls (5') umfasst eine Arbeitsfläche (4) zur Aufnahme des jeweiligen Werkstücks (21), einen Laserschneidkopf (5) zum Positionieren des Laserstrahls (5') innerhalb eines Schneidbereichs (6) auf dem jeweiligen Werkstück (21) oder der Arbeitsfläche (4), und mindestens eine austauschbare Schutzplatte (10, 11, 12, 13), welche derart angeordnet ist, dass zumindest ein Teil (8.1, 8.2, 8.1', 8.2') der Laserschneidanlage (1) in einer Umgebung des Schneidbereichs (6) zum Schutz gegen eine Einwirkung des Laserstrahls (5') und/oder eine Einwirkung von Laserschneidprodukten (22) abgedeckt ist, wobei die jeweilige Schutzplatte (10, 11, 12, 13) einen Plattengrundkörper (14) und eine Befestigungsstruktur (15, 18, 23) zum Befestigen der Schutzplatte an der Laserschneidanlage (1) umfasst. Der Plattengrundkörper (14) und die Befestigungsstruktur (15, 18, 23) der jeweiligen Schutzplatte (10, 11, 12, 13) bilden ein einstückiges ebenes Bauteil.

## Beschreibung

Die Erfindung bezieht sich auf eine Laserschneidanlage zum Schneiden von Werkstücken mittels eines Laserstrahls nach dem Oberbegriff des Patentanspruchs 1.

Laserstrahlschneiden ist ein thermisches Trennverfahren für beispielsweise plattenförmiges Material (z.B. Bleche) oder dreidimensionale Körper (z. B. Rohre oder Profile) mittels eines Laserstrahls. Der Schneidprozess wird von einem Gas unterstützt, welches - unter hohem Druck stehend - geschnittenes Material aus dem jeweiligen Schneidspalt transportiert, der während des Schneidprozesses mit Hilfe eines Laserstrahls in einem Werkstück erzeugt wird. Mit der hohen Strömungsgeschwindigkeit des Gases wird das geschmolzene Schneidgut in Form von Funken unter dem zu schneidenden Werkstück weggeschleudert. Abhängig von der Stärke und dem Material des zu schneidenden Werkstückes sowie der Fokuslage des Laserstrahls entsteht zudem während des Schneidprozesses eine intensive Laser-Reststrahlung.

Die Laser-Reststrahlung und/oder das geschmolzene Schneidgut können bei einer Einwirkung auf Strukturen bzw. Strukturelemente der Laserschneidanlage eine zerstörerische Wirkung haben. Damit diese Wirkung verhindert werden kann, sollten die gefährdeten Strukturen bzw. Strukturelemente, wie beispielsweise ein Maschinenrahmen der Laserschneidanlage oder eine Rauchgas-Absauganlage, mittels Schutzplatten geschützt werden, welche in der Umgebung des "Schneidbereichs" der Laserschneidanlage - d.h. in der Umgebung des Bereichs, in welchem das zu schneidende Werkstück für den Laserstrahl der Laserschneidanlage zugänglich ist - angeordnet sind.

Aus dem Stand der Technik bekannte Schutzplattensysteme sind in der Regel so aufgebaut, dass aufwendig hergestellte Bauteile (Schutzplatten) meist mittels Schrauben oder Hakenelementen am Maschinenrahmen befestigt werden müssen. Es sind beispielsweise Schutzplatten mit einer an der jeweiligen Schutzplatte ausgebildeten Befestigungsstruktur (zur Befestigung der Schutzplatte am Maschinenrahmen) bekannt, wobei die Schutzplatten meist einen ebenen Grundkörper umfassen und die Befestigungsstruktur in der Regel aus Teilen gebildet ist, welche mit dem Grundkörper verbunden sind und in einem rechten Winkel zur Ebene des Grundkörpers angeordnet sind. Eine derartige Befestigungsstruktur dient dazu, die jeweilige Schutzplatte mit Hilfe der im rechten Winkel zum Grundkörper angeordneten Teile in Öffnungen, die am Maschinenrahmen ausgebildet sind, aufzuhängen und zu verhaken. Schutzplatten mit derartigen Befestigungsstrukturen werden üblicherweise entweder aus mehreren Einzelteilen hergestellt (indem an einer Grundplatte ein rechtwinklig abstehendes Teil befestigt wird, beispielsweise mittels Schweissen oder Schrauben) oder durch Umformen eines ebenen, geschnittenen Blechteils (beispielsweise durch Biegen des jeweiligen Blechteils mit einer Biegemaschine, wobei zur Herstellung der Befestigungsstruktur in der Regel mehrere Abschnitte am Rand des jeweiligen Blechteils in mehreren Arbeitsschritten umgebogen werden müssen). Eine alternative Befestigungsvariante stellt das Verschrauben der Schutzplatten am Maschinenrahmen dar. Nachteilig an beiden Befestigungsvarianten ist jedoch zum einen die aufwendige Ausgestaltung der Befestigungsstruktur (Bohr-, Schweiß- oder Biegeprozesse sind notwendig) und zum anderen die aufwendige Befestigung dieser Schutzplatten am Maschinenrahmen.

Die Schutzplatten einer Laserschneidanlage befinden sich jeweils unmittelbar am Schneidbereich der Anlage und werden im Betrieb der Anlage durch eine Einwirkung des Laserstrahls stark in Mitleidenschaft gezogen. Die Schutzplatten haben in der Regel eine kurze Lebensdauer und müssen daher periodisch ausgewechselt werden. Für den Bediener der Laserschneidanlage bedeutet dies einen erheblichen Arbeitsaufwand, verbunden mit daraus resultierenden längeren Stillstandszeiten der Laserschneidanlage.

Der vorliegenden Erfindung liegt die Aufgabe zugrunde, eine Laserschneidanlage mit einer oder mehreren Schutzplatten zu schaffen, welche mit geringerem Aufwand herstellbar und mit geringem Aufwand austauschbar sind.

Diese Aufgabe wird durch eine Laserschneidanlage mit den Merkmalen des Anspruchs 1 gelöst.

Vorteilhafte Ausgestaltungen und Weiterbildungen der Erfindung ergeben sich aus den abhängigen Ansprüchen.

Die erfindungsgemässe Laserschneidanlage zum Schneiden von Werkstücken mittels eines Laserstrahls umfasst eine Arbeitsfläche zur Aufnahme des jeweiligen Werkstücks, einen Laserschneidkopf zum Positionieren des Laserstrahls innerhalb eines Schneidbereichs auf dem jeweiligen Werkstück oder der Arbeitsfläche und mindestens eine austauschbare Schutzplatte, welche derart angeordnet ist, dass zumindest ein Teil der Laserschneidanlage in einer Umgebung des Schneidbereichs zum Schutz gegen eine Einwirkung des Laserstrahls und/oder eine Einwirkung von Laserschneidprodukten abgedeckt ist, wobei die jeweilige Schutzplatte einen Plattengrundkörper und eine Befestigungsstruktur zum Befestigen der Schutzplatte an der Laserschneidanlage umfasst.

Unter dem Begriff "Laserschneidprodukt" wird in diesem Zusammenhang jede Materie verstanden, die sich im Betrieb der Laserschneidmaschine während des Schneidens eines Werkstücks unter Mitwirkung des Laserstrahls vom Werkstück ablöst und vom Werkstück wegbewegt, beispielsweise geschmolzene oder abgetrennte Teile.

Gemäss der Erfindung ist die jeweilige Schutzplatte derart ausgebildet, dass der Plattengrundkörper und die Befestigungsstruktur der Schutzplatte gemeinsam ein einstückiges ebenes Bauteil bilden.

Die jeweiligen Schutzplatten können beispielsweise an einem Maschinenrahmen, welcher üblicherweise als ein tragendes Teil der jeweiligen Laserschneidanlage ausgebildet ist und mindestens ein Teil der Laserschneidanlage trägt, angeordnet bzw. befestigt sein.

Bevorzugt, jedoch keinesfalls zwingend, werden die erfindungsgemässen Schutzplatten mit einer Laserschneidanlage, insbesondere mit der erfindungsgemässen Laserschneidanlage selbst, hergestellt. Dies bedeutet, dass jede Schutzplatte jeweils als Ganzes mit der Laserschneidanlage aus einer Platte geschnitten werden kann, wobei sich die Schutzplatte nach dem Ausschneiden bereits in der endgültigen Form befindet, sodass keine weiteren Nachbearbeitungen an der Schutzplatte notwendig sind. Der Bediener der Laserschneidanlage kann die Schutzplatten somit auf einfache Weise selbst herstellen und benötigt keine speziellen Werkzeuge, um die Befestigungsstruktur zu schaffen oder die Schutzplatten zu befestigen. Die Schutzplatten werden lediglich geschnitten und können unmittelbar nach dem Schneiden, d.h. ohne weitere Nachbearbeitung, am Maschinenrahmen befestigt werden, beispielsweise durch Einhängen der Befestigungsstruktur der jeweiligen Schutzplatte in eine geeignet geformte und an geeigneter Stelle am Maschinenrahmen ausgebildeten Ausnehmung oder Öffnung. Es ist kein Anziehen von Schrauben oder dergleichen notwendig. Die jeweiligen Schutzplatten der erfindungsgemässen Laserschneidanlage können daher auf einfache Weise, insbesondere auch ohne weitere Hilfsmittel, am Maschinenrahmen der Laserschneidanlage befestigt werden.

Die Ausgestaltung der Schutzplatten als einstückiges und flaches beziehungsweise ebenes Bauteil hat den Vorteil, dass keine hervorstehenden Befestigungsstrukturen vorhanden sind, die verhindern, dass benachbarte Schutzplatten dicht nebeneinander auf engstem Raum angeordnet werden können. Je enger die Schutzplatten aneinander liegen, desto sicherer und effektiver ist der Schutz der zu schützenden Strukturelemente.

Beispielsweise können mehrere, kleinere Schutzplatten vorgesehen sein, die in mehreren, einander zumindest in einem Randbereich (schuppenartig) überlappenden Reihen aufgehängt bzw. befestigt werden. Die schuppenartige Überlappung ist bevorzugt so ausgebildet, dass eine obere Schutzplatte, welche eine untere Schutzplatte überlappt bzw. am Rand überdeckt, jeweils die Befestigungsstruktur der unteren Schutzplatte überdeckt. Dadurch wird die Befestigungsstruktur der unteren Schutzplatte vor der Laserstrahlung geschützt. Die untere Schutzplatte wird gleichzeitig durch die obere, darüber angeordnete Schutzplatte mechanisch gegen Herunterfallen geschützt bzw. in einer stabilen Lage gehalten.

Eine Ausführungsform der erfindungsgemässen Laserschneidanlage ist derart ausgebildet, dass die Schutzplatten aus einem hitzebeständigen Material hergestellt und/oder mit einer hitzbeständigen Beschichtung versehen sind. Die Lebensdauer der Schutzplatten kann dadurch verlängert werden.

Die Befestigungsstruktur der jeweiligen Schutzplatte kann beispielsweise als Ausnehmung, beispielsweise als Langloch oder Bohrung oder dergleichen, ausgebildet sein. Diese Ausnehmung kann mittels der Laserschneidanlage durch Abtrennen eines Teils der jeweiligen Schutzplatte hergestellt werden. Vornehmlich geschieht die Herstellung der Schutzplatte bzw. der Befestigungsstruktur in einem Arbeitsgang, sodass die Schutzplatte während des Herstellungsprozesses weder gewendet noch anderweitig in ihrer Position verändert werden muss. Anders als bei aufwendigen Biege- oder Schweißprozessen ist somit keine Nachbearbeitung an der Schutzplatte bzw. der Befestigungsstruktur notwendig.

Eine andere Ausführungsform ist derart ausgebildet, dass die Befestigungsstruktur die Form eines Hakens hat. Eine derartig geformte Befestigungsstruktur kann ebenfalls durch Laserschneiden einer ebenen Platte mittels der Laserschneidanlage hergestellt werden. Eine ebene Schutzplatte mit einer oder mehreren Befestigungsstrukturen in Form von beispielsweise L-förmigen Haken, welche am Rande der jeweiligen Schutzplatte ausgebildet sind, kann beispielsweise in einem Stück aus einer Platte geschnitten werden, wobei keine weiteren Nachbearbeitungen notwendig sind.

Die Befestigungsstruktur kann grundsätzlich beinahe beliebig ausgebildet sein, solange ein einfaches Einhängen der Schutzplatte am Maschinenrahmen ermöglicht wird.

Um ein Einhängen der Schutzplatten am Maschinenrahmen zu ermöglichen, sind am Maschinenrahmen entsprechende Befestigungselemente ausgebildet, deren Form jeweils komplementär zu der Form der Befestigungsstruktur der jeweiligen Schutzplatte ist. So können unmittelbar im Maschinenrahmen oder in speziellen Trägerelementen, welche am Maschinenrahmen angeordnet sind, Befestigungselemente in Form von Ausnehmungen oder Öffnungen ausgebildet sein, in welche Schutzplatten mit Befestigungsstrukturen in Form von Haken eingehängt werden können.

Eine weitere Ausführungsform ist derart ausgebildet, dass mehrere Schutzplatten jeweils in einer Reihe übereinander angeordnet sind, wobei die jeweils obere der beiden benachbarten Schutzplatten die untere der beiden benachbarten Schutzplatten derart überlappt, dass die untere der beiden benachbarten Schutzplatten durch die obere der beiden benachbarten Schutzplatten an dem jeweiligen Befestigungselement gehalten und/oder in einer stabilen Lage gehalten und/oder gegen Herunterfallen gesichert ist.

Die Laserschneidanlage kann zusätzlich ein Sicherungsmittel für die zuoberst angeordnete Schutzplatte der jeweiligen Reihe umfassen, wobei das Sicherungsmittel so ausgebildet ist, dass es die zuoberst angeordnete Schutzplatten daran hindert, nach oben gekippt, verschoben oder anderweitig bewegt zu werden. Das Sicherungsmittel kann beispielsweise als ein zwischen zwei Stellungen bewegbarer Körper ausgebildet sein, welcher in einer der beiden Stellungen die zuoberst angeordnete Schutzplatte (beispielsweise im Falle mechanischer Stösse) daran hindert, nach oben gekippt, verschoben oder anderweitig bewegt zu werden. Wenn das Sicherungsmittel geeignet positioniert ist, dann ist die obere Schutzplatte der jeweiligen Reihe vor dem Herausfallen geschützt, und da die obere Schutzplatte die unteren Schutzplatten der jeweiligen Reihe am Herausfallen hindert (wenn die obere Reihe blockiert ist), sind auf diese Weise auch die unteren Platten und somit alle Schutzplatten der jeweiligen Reihe gesichert.

Das Sicherungsmittel kann beispielsweise als Plattenkörper ausgebildet sein, wobei am Plattenkörper Mittel zum Blockieren der oberen Schutzplatte ausgebildet sind. Die Mittel zum Blockieren können beispielsweise in der Art einer Ausnehmung oder dergleichen ausgebildet sein, die so geformt ist, dass der Plattenkörper auf die Befestigungsstruktur der oberen Schutzplatte gesteckt werden kann und diese gegen Herausrutschen aus dem entsprechenden Befestigungselement sichert. Auch der Plattenkörper kann mittels des Laserschneidverfahrens auf der erfindungsgemässen Laserschneidanlage hergestellt sein. Ferner kann der Plattenkörper durch zusätzliche Sicherungselemente wie Schrauben oder dergleichen zusätzlich gegen mechanische Stösse gesichert werden.

Ein Ausführungsbeispiel der Erfindung wird im Folgenden anhand der Zeichnungen näher erläutert.

Es zeigen:
- Fig. 1: eine erfindungsgemäße Laserschneidanlage mit mehreren Schutzplatten in perspektivischer Darstellung;
- Fig. 2: die Laserschneidanlage gemäss Fig. 1 in einer Seitenansicht;
- Fig. 3: die Befestigung der Schutzplatten und eines Sicherungsmittels für die Schutzplatten;
- Fig. 4: die Schutzplatten und das Sicherungsmittel nach erfolgter Montage;
- Fig. 5: die Anordnung gemäss Fig. 3 in einer vergrösserten Seitenansicht;
- Fig. 6: die Anordnung gemäss Fig. 4 in einer vergrösserten Seitenansicht.

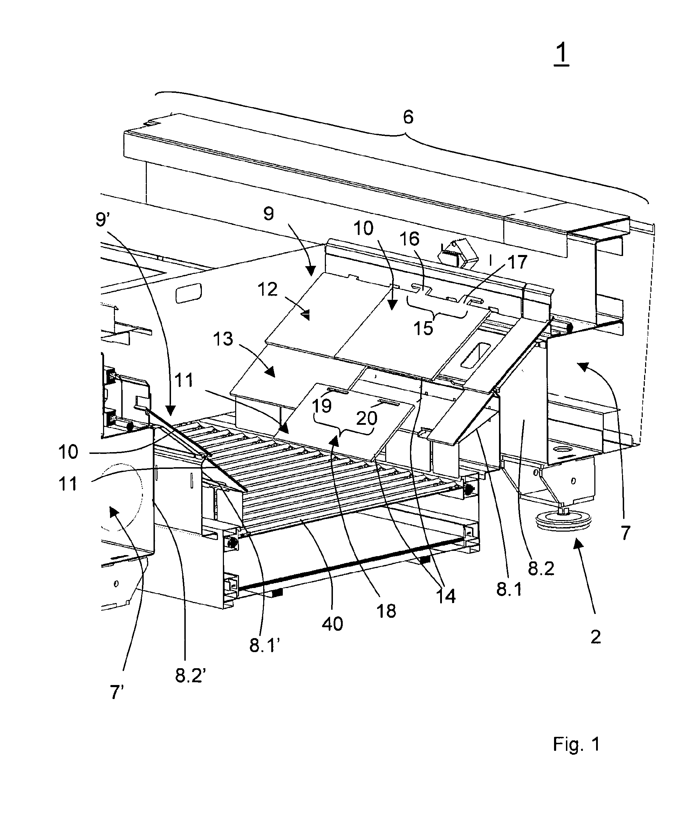

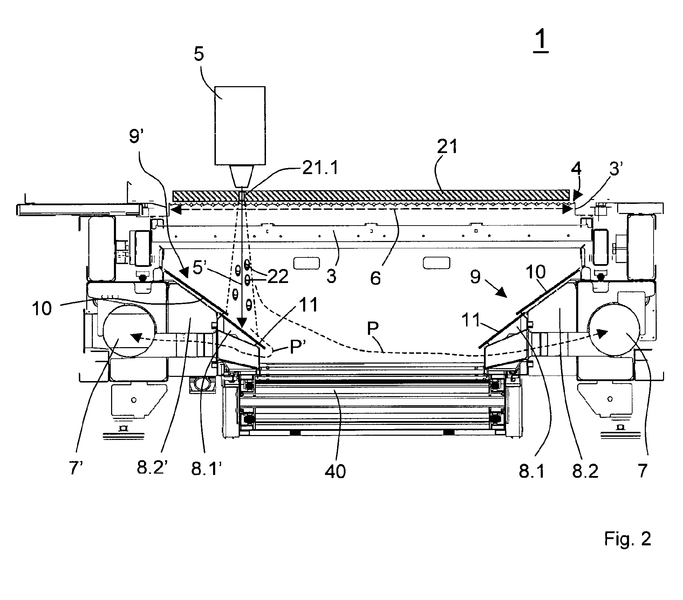

Fig. 1 und 2 zeigen eine Laserschneidanlage 1 zum Schneiden von Werkstücken mit einem Maschinenrahmen 2, einem (in Fig. 1 nicht dargestelltem) Auflagetisch 3 mit einer (in Fig. 1 nicht dargestellter) Arbeitsfläche 4 zur Aufnahme des jeweiligen Werkstücks und mit einem (in Fig. 1 nicht dargestellten) Laserschneidkopf 5.

Die Arbeitsfläche 4 wird von der Oberseite eines Rosts 3' gebildet, welcher aus einer Vielzahl von nebeneinander angeordneten, von Zwischenräumen getrennten Blechen besteht und in den Auflagetisch 3 integriert ist.

Der Laserschneidkopf 5 umfasst eine (nicht dargestellte) Fokussierungsoptik, mit welcher ein Laserstrahl 5' auf dem zu schneidenden Werkstück innerhalb eines Schneidbereichs 6 positionierbar und auf eine Oberfläche des jeweiligen Werkstücks fokussierbar ist. Um das jeweilige Werkstück längs vorgegebener Kurven im gesamten Schneidbereich 6 mit Hilfe des Laserstrahls 5' schneiden zu können, kann der Laserschneidkopf 5 oberhalb der Arbeitsfläche 4 bzw. des Schneidbereichs 6 unter Kontrolle einer nicht dargestellten Steuerung entsprechend entlang der jeweiligen Kurven bewegt werden.

Fig. 2 zeigt ein auf dem Auflagetisch 3 angeordnetes Werkstück 21, auf dessen oberen Oberfläche der Laserstrahl 5' fokussiert ist.

Unterhalb des Schneidbereichs 6 sind Schutzplattengruppen 9, 9' vorgesehen, die aus austauschbaren, am Maschinenrahmen 2 befestigbaren Schutzplatten 10, 11, 12, 13 bestehen und bestimmte Komponenten der Laserschneidanlage 1, insbesondere Rauchgas-Abgasvorrichtungen 7, 7' und einige Strukturelemente 8.1, 8.2, 8.1' und 8.2' der Laserschneidanlage 1 in der Umgebung der Rauchgas-Abgasvorrichtungen 7, 7' abdecken und gegen eine Einwirkung des Laserstrahls 5' und gegebenenfalls gegen eine Einwirkung von Laserschneidprodukten schützen.

Die Schutzplatten 10, 11, 12 und 13 umfassen jeweils einen ebenen Grundkörper 14 und eine (integrierte, mit dem Grundkörper 14 verbundene) Befestigungsstruktur 15 oder 18.

Die Schutzplatte 10 beispielsweise umfasst den Plattengrundkörper 14 und die Befestigungsstruktur 15, wobei die Befestigungsstruktur 15 aus zwei Hakenelementen 16 und 17 besteht und der Plattengrundkörper 14 und die Befestigungsstruktur 15 ein einstückiges und ebenes bzw. flaches Bauteil bilden (wie aus Fig. 1 - 3 ersichtlich).

Die Schutzplatte 11 weist hingegen die Befestigungsstruktur 18 auf, welche Ausnehmungen (Schlitze) 19 und 20 umfasst, die in dem Grundkörper 14 ausgebildet sind. Die Schutzplatte 11 bildet demnach ebenfalls ein einstückiges, ebenes Bauteil.

Fig. 2 zeigt die Laserschneidanlage 1 in einer Seitenansicht mit dem Auflagetisch 3, der Arbeitsfläche 4, dem Laserschneidkopf 5 und dem Schneidbereich 6. Der zu schützende Bereich der Maschinenstruktur befindet sich, wie in Fig. 1 angedeutet, unterhalb des Schneidbereichs 6. Wie in Fig. 2 angedeutet, ist der Laserschneidkopf 5 beim Schneiden über dem Werkstück 21 derart bewegbar, dass das Werkstück 21 innerhalb des gesamten Schneidbereichs 6 mit dem Laserstrahl 5' bearbeitet bzw. geschnitten werden kann. Im Schneidkopf 5 wird der Laserstrahl 5' so fokussiert, dass die grösstmögliche Energiedichte unmittelbar auf dem Werkstück 21 bzw. in einem mit dem Laserstrahl 5' in das Werkstück 21 geschnittenen Schneidspalt 21.1 erzielt wird. Durch diese Fokussierung wird die Energiedichte des Laserstrahls 5' unterhalb des Werkstückes 21 mit Zunahme der Distanz vom Schneidkopf 5 exponentiell kleiner.

Es wäre daher vorteilhaft, den Abstand zwischen dem Laserschneidkopf 5 und den unterhalb des Schneidbereichs 6 angeordneten Strukturelementen 8.1, 8.2, 8.1' und 8.2' möglichst gross zu halten. Um allerdings zu gewährleisten, dass beispielsweise die Rauchgas-Abgasvorrichtungen 7, 7' das beim Schneiden des Werkstücks 21 entstehende Rauchgas strömungstechnisch optimal absaugen können (ein Rauchgasstrom ist in Fig. 2 durch Pfeile P, P' angedeutet) und dass beim Schneiden anfallendes Schneidgut 22 auf ein Transportband 40 zum Abtransport des Schneidguts 22 geleitet werden kann, ist die Distanz zwischen dem Laserschneidkopf 5 und den Strukturelementen 8.1, 8.2, 8.1' und 8.2' auf beiden Seiten des Transportbandes 40 aus konstruktiven Gründen relativ klein. Wären die Strukturelemente 8.1, 8.2, 8.1', 8.2' unter diesen Umständen dem Laserstrahl 5' ausgesetzt, dann würden die Strukturelemente 8.1, 8.2, 8.1', 8.2' in kurzer Zeit Schaden durch eine Einwirkung von Laser-Reststrahlung bzw. von Laserschneidprodukten (z.B. geschmolzenes Schneidgut) nehmen.

Durch eine Beplankung mit den Schutzplattengruppen 9, 9' wird eine Zerstörung bzw. Beschädigung der Strukturelemente 8.1, 8.2, 8.1', 8.2' verhindert. In periodischen Abständen können die Schutzplatten 10, 11, 12, 13 entfernt und durch neue ersetzt werden. Die Schutzplattengruppe 9' besteht im Wesentlichen aus der gleichen Anzahl einzelner Schutzplatten (bei gleicher Anordnung) wie die Schutzplattengruppe 9.

Aufgrund des einfachen Aufbaus der Schutzplatten ist ein Bediener der Laserschneidanlage 1 in der Lage, bei Bedarf selbständig neue Schutzplatten herzustellen und einzubauen.

Die Fig. 1-3 zeigen, wie die Schutzplatten 10, 11, 12 und 13 der Schutzplattengruppen 9, 9' am Maschinenrahmen 2 befestigt werden. Es sei darauf hingewiesen, dass die Schutzplatten 10 und 12 dieselbe Form aufweisen. Entsprechend haben die Schutzplatten 11 und 13 dieselbe Form.

Zunächst werden die Schutzplatten 11 und 13 der jeweiligen Schutzplattengruppe 9 bzw. 9' in einer unteren (horizontalen) Reihe nebeneinander befestigt. Zu diesem Zweck sind an den Strukturteilen 8.1 und 8.1' des Maschinenrahmens 2 (in den Figuren nicht dargestellte) Befestigungselemente in Form von Haken, an welchen die Schutzplatten 11 und 13 mittels der Ausnehmungen 19 und 20 aufgehängt werden können, angeordnet.

Im nächsten Schritt werden die Schutzplatten 10 und 12 der jeweiligen Schutzplattengruppe 9 bzw. 9' in einer oberen (horizontalen) Reihe am Maschinenrahmen 2 befestigt. Dabei wird die Schutzplatte 10 derart oberhalb der Schutzplatte 11 angeordnet, dass sie die Schutzplatte 11 am oberen Rand überlappt und die Ausnehmungen 19 und 20 der Schutzplatte 11 abdeckt und somit gegen die Einwirkung des Laserstrahls 5' schützt. Entsprechend wird die Schutzplatte 12 derart oberhalb der Schutzplatte 13 angeordnet, dass sie die Schutzplatte 13 am oberen Rand überlappt und die Ausnehmungen 19 und 20 der Schutzplatte 13 abdeckt. Durch diese überlappende Anordnung der Schutzplatten 10 und 12 ist gewährleistet, dass die zuunterst angeordneten Schutzplatten 11 und 13 in einer stabilen Lage gehalten sind und erst wieder entfernt werden können, wenn die oberen Schutzplatten 10 bzw. 12 jeweils zuvor entfernt wurden.

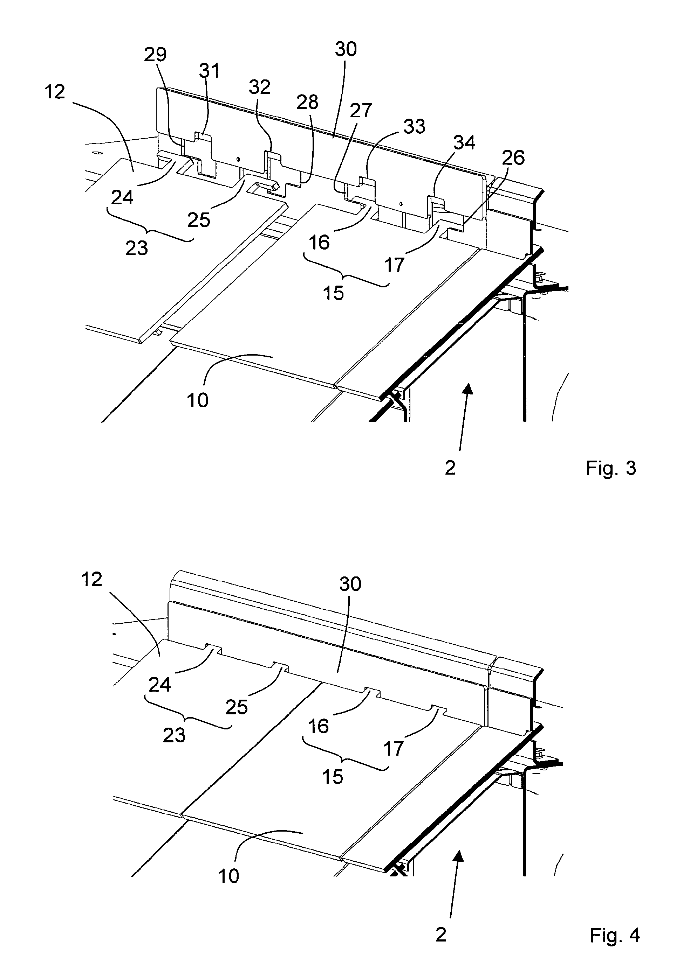

Fig. 3 zeigt die Befestigung der Schutzplatten 10, 12 am Maschinenrahmen 2. Die Schutzplatten 10, 12 werden mit der Befestigungsstruktur 15, 23, gebildet durch die Hakenelemente 16, 17, 24 und 25, an entsprechenden Befestigungselementen in Form von Ausnehmungen 26, 27, 28 und 29, welche am Maschinenrahmen 2 (oder an einem am Maschinenrahmen angeordneten Trägerelement) ausgebildet sind, befestigt, indem die Schutzplatten 10 und 12 mit den Hakenelementen 16, 17, 24 und 25 in die Ausnehmungen 26, 27, 28 und 29 eingehängt werden.

Oberhalb der Befestigungsstrukturen 15, 23 ist ein Sicherungsmittel 30 zur Sicherung der Platten 10 und 12 dargestellt. Das Sicherungsmittel 30 besteht aus einer Platte, welche zu den Hakenelementen 16, 17, 24, 25 formkomplementäre Ausnehmungen 31, 32, 33, 34 aufweist und, wie in Fig. 4 dargestellt, auf die Hakenelemente 16, 17, 24, 25 gesteckt werden kann, sodass diese gegen mechanische Stösse gesichert sind und in einer stabilen Lage gehalten werden.

Im vorliegenden Fall ist das Sicherungsmittel 30 zwischen zwei Stellungen bewegbar, wobei das Sicherungsmittel 30 in einer der beiden Stellungen die zuoberst angeordnete Schutzplatten 10 und 12 daran hindert, nach oben gekippt, verschoben oder anderweitig bewegt zu werden.

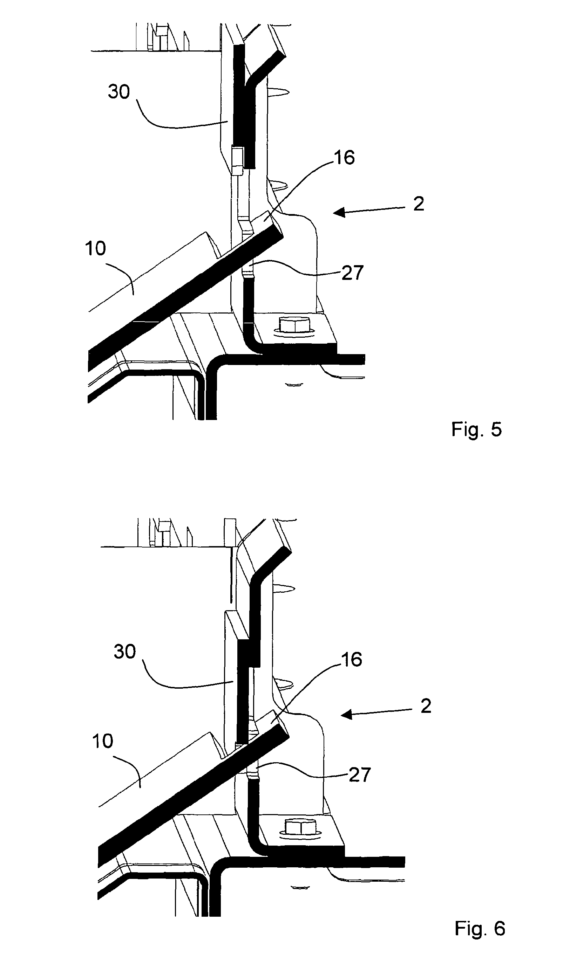

Die Fig. 5 und 6 zeigen das Sicherungsprinzip in einer jeweils vergrößerten und teilweise geschnittenen Seitenansicht. Die Schutzplatte 10 wird über das Hakenelement 16 in die entsprechende Ausnehmung 27 am Maschinenrahmen eingehängt. Im oberen Bereich ist das Sicherungsmittel 30 zu erkennen, welches, wie in Fig. 6 dargestellt, nachdem die Schutzplatte 10 in die Ausnehmungen gehängt wurde, heruntergeschoben wird und so das Hakenelement 16 und entsprechend alle anderen Hakenelemente blockiert.

## Patentansprüche

1. Laserschneidanlage (1) zum Schneiden von Werkstücken (21) mittels eines Laserstrahls (5'),
mit einer Arbeitsfläche (4) zur Aufnahme des jeweiligen Werkstücks (21),
mit einem Laserschneidkopf (5) zum Positionieren des Laserstrahls innerhalb eines Schneidbereichs (6) auf dem jeweiligen Werkstück (21) oder der Arbeitsfläche (4), und
mit mindestens einer austauschbaren Schutzplatte (10, 11, 12, 13), welche derart angeordnet ist, dass zumindest ein Teil (8.1, 8.2, 8.1', 8.2') der Laserschneidanlage (1) in einer Umgebung des Schneidbereichs (6) zum Schutz gegen eine Einwirkung des Laserstrahls (5') und/oder eine Einwirkung von Laserschneidprodukten (22) abgedeckt ist,
wobei die jeweilige Schutzplatte (10, 11, 12, 13) einen Plattengrundkörper (14) und eine Befestigungsstruktur (15, 18, 23) zum Befestigen der Schutzplatte an der Laserschneidanlage (1) umfasst,
**dadurch gekennzeichnet, dass** der Plattengrundkörper (14) und die Befestigungsstruktur (15, 18, 23) der Schutzplatte (10, 11, 12, 13) ein einstückiges ebenes Bauteil bilden.

2. Laserschneidanlage nach Anspruch 1, **dadurch gekennzeichnet, dass** die Laserschneidanlage (1) einen Maschinerahmen (2) umfasst, welcher mindestens ein Teil der Laserschneidanlage (1) trägt, und die jeweilige Schutzplatte (10, 11, 12, 13) an dem Maschinenrahmen (2) befestigt ist.

3. Laserschneidanlage nach einem der Ansprüche 1 oder 2, **dadurch gekennzeichnet, dass** die Schutzplatte (10, 11, 12, 13) durch Schneiden einer ebenen Platte mittels eines Laserstrahls, insbesondere mittels der Laserschneidanlage (1), herstellbar ist.

4. Laserschneidanlage nach einem der Ansprüche 1 - 3, **dadurch gekennzeichnet, dass** die Schutzplatte (10, 11, 12, 13) aus einem hitzbeständigen Material hergestellt und/oder mit einer hitzbeständigen Beschichtung versehen ist.

5. Laserschneidanlage nach einem der Ansprüche 1 bis 4, **dadurch gekennzeichnet, dass** die Befestigungsstruktur (18) als Ausnehmung (19, 20), beispielsweise als Langloch oder Bohrung, ausgebildet ist.

6. Laserschneidanlage nach einem der Ansprüche 1 bis 4, **dadurch gekennzeichnet, dass** die Befestigungsstruktur (15, 23) die Form eines Hakens (16, 17, 24, 25) aufweist.

7. Laserschneidanlage nach einem der Ansprüche 1 bis 6, **dadurch gekennzeichnet, dass**
an der Laserschneidanlage (1) eine oder mehrere Befestigungselemente (15, 23) zum Befestigen der jeweiligen Schutzplatte (10, 12) angeordnet sind, wobei jedes Befestigungselement (16, 17, 28, 29) eine zu der jeweiligen Befestigungsstruktur (15, 23) der Schutzplatte 10, 12) komplementäre Form aufweist und die Schutzplatte mittels der jeweiligen Befestigungsstruktur an den jeweiligen Befestigungselementen aufhängbar ist.

8. Laserschneidanlage nach Anspruch 7, **dadurch gekennzeichnet, dass**
die Laserschneidanlage mehrere Schutzplatten (10, 11, 12, 13) umfasst, welche in einer Reihe oder in mehreren Reihen aneinandergereiht angeordnet sind.

9. Laserschneidanlage nach Anspruch 8, **dadurch gekennzeichnet, dass**
mehrere Schutzplatten (10, 11) in jeweils einer der Reihen derart angeordnet sind, dass jeweils zwei benachbarte Schutzplatten (10, 11) sich in Randbereichen der beiden benachbarten Schutzplatten derart überlappen, dass die eine der beiden benachbarten Schutzplatten (10) die jeweiligen Befestigungsstrukturen (18) der anderen der beiden benachbarten Schutzplatten (11) zum Schutz gegen eine Einwirkung des Laserstrahls (5') und/oder eine Einwirkung von Laserschneidprodukten (22) abgedeckt.

10. Laserschneidanlage nach Anspruch 9, **dadurch gekennzeichnet, dass**
die Schutzplatten (10, 11) in der jeweiligen Reihe jeweils übereinander angeordnet sind, wobei die jeweils obere der beiden benachbarten Schutzplatten (10) die untere der beiden benachbarten Schutzplatten (11) derart überlappt, dass die untere der beiden benachbarten Schutzplatten (11) durch die obere der beiden benachbarten Schutzplatten (10) an dem jeweiligen Befestigungselement gehalten und/oder in einer stabilen Lage gehalten und/oder gegen Herunterfallen gesichert ist.

11. Laserschneidanlage nach Anspruch 10, **dadurch gekennzeichnet, dass**
die Laserschneidanlage ein Sicherungsmittel (30) für die zuoberst angeordnete Schutzplatte (10, 12) umfasst, wobei das Sicherungsmittel so ausgebildet ist, dass es die zuoberst angeordnete Schutzplatten (10, 12) daran hindert, nach oben gekippt, verschoben oder anderweitig bewegt zu werden.

12. Laserschneidanlage nach Anspruch 11, **dadurch gekennzeichnet, dass**
das Sicherungsmittel als ein zwischen zwei Stellungen bewegbarer Körper (30) ausgebildet ist, welcher in einer der beiden Stellungen die zuoberst angeordnete Schutzplatte (10, 12) daran hindert, nach oben gekippt, verschoben oder anderweitig bewegt zu werden.
